# EUROPEAN PATENT APPLICATION

(11) **EP 4 759 970 A1**
(43) Date of publication of application: **17.06.2026**
(21) Application number: 24851363.2
(22) Date of filing: 27.05.2024
(51) Int. Cl.: C25B 11/042, B01J 23/46, B01J 35/60, B01J 37/03, B01J 37/08, C25B 1/04, C25B 9/00, C25B 9/19, C25B 11/052

(54) **IRIDIUM OXIDE AND METHOD FOR PRODUCING SAME, AND MEMBRANE ELECTRODE ASSEMBLY FOR PROTON EXCHANGE MEMBRANE-TYPE WATER ELECTROLYSIS VESSEL AND PROTON EXCHANGE MEMBRANE-TYPE WATER ELECTROLYSIS VESSEL USING IRIDIUM OXIDE**

(30) Priority: 07.08.2023 JP 2023128460
(71) Applicant: Ishifuku Metal Industry Co., Ltd., Chiyoda-ku, Tokyo 101-8654 (JP)
(72) Inventor: ISHIDA, Takanobu, Soka-shi, Saitama 340-0002 (JP); AOKI, Naoya, Soka-shi, Saitama 340-0002 (JP); SAKURADA,Yu, Soka-shi, Saitama 340-0002 (JP); WATANABE,Yuta, Soka-shi, Saitama 340-0002 (JP); TAKEDA,Yuko, Soka-shi, Saitama 340-0002 (JP)
(74) Representative: Kraus & Lederer PartGmbB
(86) International application number: PCT/JP2024/019379
(87) International publication number: WO 2025/032929

(57) **Abstract**

[Object] To provide iridium oxide suitable for proton exchange membrane-type water electrolysis, the iridium oxide having high initial activity and being excellent in stability during a long-term operation.

[Solution] Provided is iridium oxide having a rutile structure, the iridium oxide being characterized by having: a crystallite size of 2.0 nm to 4.0 nm as calculated from a peak of a (110) plane of the rutile-structured iridium oxide determined by X-ray diffraction; and a BET specific surface area, measured by nitrogen adsorption measurement, of 70 m²/g to 120 m²/g.

## Description

### Technical Field

The present invention relates to a proton exchange membrane water electrolyzer, and iridium oxide used in a water electrolyzer or the like.

### Background Art

In recent years, hydrogen production technologies by water electrolysis have been attracting attention in response to social demand and trend based on energy and environmental issues. For example, a proton exchange membrane water electrolyzer is characterized by using an electrolyte layer comprising a film-like proton exchange membrane.

Typically, the proton exchange membrane water electrolyzer has a structure in which a plurality of single electrolysis cells comprising a membrane electrode assembly (hereinafter, referred to as "MEA") sandwiched between a pair of separators are layered. The MEA has a structure in which an electrolyte layer is sandwiched between electrode catalyst layers comprising a highly dispersed electrode catalyst. The electrode catalyst layer is also called an electrode.

In the MEA, the following electrochemical reaction proceeds. Firstly, water fed on an anode side is oxidized by catalyst particles and becomes a proton and an electron and oxygen. Then, the generated proton passes through a proton conductive electrolyte comprised in the electrode catalyst layer and a proton exchange membrane that is in contact with the electrode catalyst layer and reaches an electrode catalyst layer on a cathode side. Furthermore, the electron generated in the electrode catalyst layer on the anode side passes through the electrode catalyst layer, a porous moving bed in contact with the electrode catalyst layer on a side different from the proton exchange membrane side, a separator, and an external circuit, and reaches the electrode catalyst layer on the cathode side. The electron and the proton reaching the electrode catalyst layer on the cathode side react to form hydrogen. The water electrolysis enables production of hydrogen through the electrochemical reaction mentioned above.

In a known electrode catalyst, the anode uses a noble metal oxide such as iridium oxide, and the cathode uses a catalyst-loaded carbon or the like. In the catalyst-loaded carbon, catalyst particles of platinum or a platinum alloy or the like are loaded by using, as a support, carbon support comprising carbon as a main component.

The proton exchange membrane water electrolyzer has a problem of cost of an anode using a large amount of iridium. Because iridium is rare and expensive, to spread and expand the proton exchange membrane water electrolyzer, a catalyst that is highly active and contributes to reduction in iridium amount of the anode catalyst and that is excellent in stability for operation for a long period of time has been demanded.

Thus, various studies have been conducted for a catalyst having high initial activity and excellent stability and an MEA exhibiting electrolysis performance stable for a long period of time.

Patent Document 1 discloses amorphous iridium oxide; however, from the viewpoint of stability, crystalline iridium oxide has been demanded.

Patent Document 2 discloses a catalyst layer containing iridium and ruthenium; however, from the viewpoint of stability in operation for a long period of time, a catalyst layer containing no ruthenium has been demanded.

### Citation List

### Patent Document

Patent Document 1: JP 7297962 B
Patent Document 2: JP 2021-045709 A

### Summary of Invention

### Technical Problem

In Patent Documents 1 and 2, amorphous iridium oxide or ruthenium is contained, and thus high initial activity is exhibited; however, stability in operation for a long period of time is concerned. To achieve improvement in stability in operation for a long period of time, a catalyst needs to consist only of iridium oxide having a large crystallite size. However, iridium oxide having a large crystallite size has a small specific surface area, and thus the activity of an electrode catalyst decreases.

An object of the present invention is to provide iridium oxide having high initial activity and excellent stability in operation for a long period of time.

### Solution to Problem

The present inventors have found that the problems described above can be solved by obtaining iridium oxide having a crystallite size and a BET specific surface area (SSA) in a compatible manner at a high level, where the crystallite size determined by X-ray diffractometry is 2.0 nm or more and 4.0 nm or less and the BET specific surface area (SSA) determined by nitrogen adsorption measurement is 70 m²/g or more and 120 m²/g or less, by neutralizing an iridium-containing acidic aqueous solution with an alkaline aqueous solution and firing the resultant iridium hydroxide, and thus have completed the present invention. The reason for realizing iridium oxide having the crystallite size and the BET specific surface area (SSA) in a compatible manner at a high level is not necessarily clear, but the present inventors presume as follows. Without being bound by theory, because the iridium oxide is an aggregate of highly two-dimensionally anisotropic acicular or columnar particles, the iridium oxide can maintain the BET specific surface area (SSA) while the crystallite size is improved. It is conceived that the acicular or columnar structure of the iridium oxide can be formed by firing after addition of hydrochloric acid after the neutralization mentioned above.

That is, the present invention provides iridium oxide, a membrane electrode assembly for a proton exchange membrane water electrolysis comprising the iridium oxide in an electrode, and a proton exchange membrane water electrolyzer, which have the following aspects (1) to (7).
(1) Iridium oxide having a rutile structure, wherein
   a crystallite size calculated based on a peak of a (110) plane of the rutile-structured iridium oxide determined by X-ray diffractometry is 2.0 nm or more and 4.0 nm or less, and
   a BET specific surface area measured by nitrogen adsorption measurement is 70 m²/g or more and 120 m²/g or less.
(2) The iridium oxide according to (1) mentioned above, wherein a form observed with an electron microscope is an aggregate of acicular or columnar particles having a major axis length of 200 nm or less and a minor axis length of 10 nm or less, and a diameter of the aggregate is 1 µm or less.
(3) A method for producing the iridium oxide described in claim 1 or 2, the method comprising:
   preparing an oxidizing agent-containing aqueous solution by adding an oxidizing agent to a heated iridium-containing acidic aqueous solution, and neutralizing the thus-prepared aqueous solution by adding an alkaline aqueous solution to the aqueous solution, thereby generating a precipitate of iridium hydroxide;
   filtering the aqueous solution comprising the precipitate, and washing the remaining precipitate, thereby yielding a filter cake of the iridium hydroxide; and
   adding hydrochloric acid to the filter cake to prepare an iridium hydroxide suspension, subjecting the suspension to solvent removal by distillation, and then firing a dry solid product obtained by the solvent removal at 420 to 470°C in an oxygen-containing atmosphere.
(4) A membrane electrode assembly for proton exchange membrane water electrolysis, wherein the iridium oxide described in (1) or (2) mentioned above is comprised in an electrode.
(5) A proton exchange membrane water electrolyzer, wherein the iridium oxide described in (1) or (2) mentioned above is comprised in an electrode of a membrane electrode assembly.

### Advantageous Effects of Invention

Because the iridium oxide provided by the present invention has the crystallite size and the specific surface area in a compatible manner, the iridium oxide can exhibit high initial activity and excellent stability in operation for a long period of time.

### Brief Description of Drawings

FIG. 1 illustrates a relationship between a crystallite size and a specific surface area of iridium oxide produced in each of Examples and Comparative Examples.

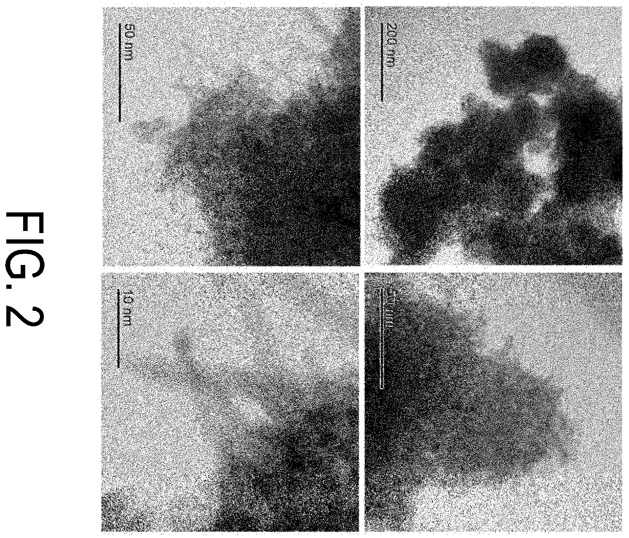

FIG. 2 illustrates forms of iridium oxide produced in Examples.

### Description of Embodiments

Next, the present invention will be described with reference to embodiments. However, the present invention is not limited to the embodiments described below.

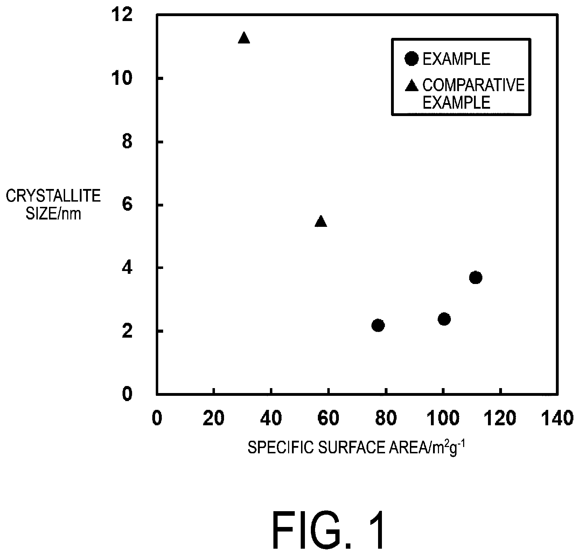

In the present invention, the iridium oxide needs to have a crystallite size determined by X-ray diffractometry of 2.0 nm or more and 4.0 nm or less and a BET specific surface area (SSA) determined by nitrogen adsorption measurement of 70 m²/g or more and 120 m²/g or less. FIG. 1 illustrates the relationship between the crystallite sizes and the BET specific surface areas (SSA) of iridium oxides of the present invention and the related art. The iridium oxide of the present invention is iridium oxide having the crystallite size and the BET specific surface area (SSA) in a compatible manner at a high level, as compared to one in the related art.

The iridium oxide may comprise, for example, platinum or rhodium, as long as it contributes to an object of the present invention.

The method for producing iridium oxide of the aspect (3) mentioned above can be more specifically described as follows.

Examples of the iridium-containing acidic aqueous solution include an aqueous hydrochloric acid solution or aqueous nitric acid solution of iridium(III) chloride, iridium(IV) chloride, chloroiridic(IV) acid, ammonium chloroiridate(IV), iridium(IV) nitrate, iridium(III) acetate, or the like.

Firstly, an oxidizing agent is added to a heated iridium-containing acidic aqueous solution, and then an alkaline aqueous solution is added to neutralize the mixture, to generate a precipitate of iridium hydroxide.

The heating temperature can be from 80°C to 100°C. As the oxidizing agent, sodium bromate, potassium bromate, chlorine gas, or hydrogen peroxide water can be used. As the alkaline aqueous solution, an aqueous sodium hydroxide solution, an aqueous potassium hydroxide solution, or an aqueous sodium carbonate solution can be used. The pH at the time of neutralization can be from 10 to 12.

Next, the neutralized aqueous solution comprising the iridium hydroxide precipitate was filtered and washed to yield a filter cake.

Next, hydrochloric acid was added to the filter cake to adjust the pH to 0 to 2 to prepare an iridium hydroxide suspension. This suspension was subjected to solvent removal by distillation at 40 to 60°C by using an evaporator, and then the dry solid product obtained by this treatment was crushed to produce powder.

Next, the powder described above is fired in an oxygen-containing atmosphere, such as air, at 420 to 470°C for 3 to 7 hours, and thus iridium oxide powder having an acicular or columnar structure is obtained. For example, an electric furnace can be used for firing.

Because the obtained iridium oxide is an aggregate of highly two-dimensionally anisotropic acicular or columnar particles, the iridium oxide can maintain the BET specific surface area (SSA) while the crystallite size is improved. It is conceived that the acicular or columnar structure of the iridium oxide can be formed by firing after addition of hydrochloric acid after the neutralization mentioned above.

When the crystallite size of the iridium oxide is increased to 2.0 nm or more, deterioration of the iridium oxide can be suppressed, and high stability can be exhibited.

Corrosion and disappearance of iridium oxide in an electrode catalyst tend to occur in a defective site on an iridium oxide surface as a starting point, and thus, the defect on the iridium oxide surface is preferably reduced by increasing the crystallinity of the iridium oxide.

In contrast, when the crystallite size is more than 4.0 nm, the BET specific surface area (SSA) described below decreases, and the BET specific surface area (SSA) and the crystallite size cannot be provided in a compatible manner at a high level.

The crystallite size is preferably 2.1 nm or more and 3.9 nm or less, and more preferably 2.3 nm or more and 3.8 nm or less.

When the BET specific surface area (SSA) is increased to 70 m²/g or more, a high initial activity can be exhibited. The BET specific surface area (SSA) indicates an area that serves as an active site for an oxygen generation reaction. A higher BET specific surface area (SSA) indicates a higher initial activity.

In general, in the iridium oxide for proton exchange membrane water electrolysis, when the BET specific surface area (SSA) is increased, active sites sufficient for an oxygen generation reaction can be ensured, and a high initial activity can be exhibited.

Corrosion and disappearance or the like in an electrode catalyst tend to occur particularly in a defective site, such as a step or a kink, and thus iridium oxide having a large specific surface area and a small crystallite size may have poor stability. Thus, to provide initial activity and stability in a compatible manner, the BET specific surface area (SSA) is desirably limited to a proper value. That is, when the BET specific surface area (SSA) is set to 120 m²/g or less, degradation of the stability of the iridium oxide can be suppressed. Furthermore, when the BET specific surface area (SSA) is made more than 120 m²/g, the aforementioned crystallite size decreases, and the crystallite size and the BET specific surface area (SSA) cannot be achieved in a compatible manner.

The BET specific surface area (SSA) is preferably 75 m²/g or more, and more preferably 80 m²/g or more and 115 m²/g or less.

To provide a large crystallite size and a BET specific surface area (SSA) in a compatible manner, the form observed with an electron microscope is preferably an aggregate of acicular or columnar particles having a major axis length of 200 nm or less and a minor axis length of 10 nm or less.

The aggregate preferably has a diameter of 1 µm or less to reduce mass transfer resistance and electron transfer resistance in a catalyst layer and to suppress perforation of an electrolyte membrane.

The iridium oxide of the present invention needs to have a crystallite size of 2.0 nm or more and 4.0 nm or less, and to contain acicular or columnar particles having a major axis length of 200 nm or less and a minor axis length of 10 nm or less. When the iridium oxide has a crystallite size in the range described above and has the structure described above, the BET specific surface area (SSA) is improved while the crystallinity is enhanced, and thus a high initial activity can be exhibited.

The BET specific surface area (SSA) of the iridium oxide of the present invention is calculated based on analysis by the BJH method employing adsorption isotherm measurement of a nitrogen gas. In the present invention, it is important that the BET specific surface area (SSA) is 70 m²/g or more and 120 m²/g or less.

When the BET specific surface area (SSA) is less than 70 m²/g, active sites of an oxygen generation reaction are insufficient and thus the initial activity decreases, whereas when the BET specific surface area (SSA) is more than 120 m²/g, defective sites such as steps and kinks increase and thus the stability decreases.

The crystallite size of the iridium oxide of the present invention is calculated based on the (110) plane of the rutile-structured iridium oxide (IrO₂). The crystallite size of the (110) plane of the iridium oxide can be in a range of 2.0 nm or more and 4.0 nm or less.

The crystallite size of the (110) plane of the iridium oxide is in the range described above, and thus initial activity and stability can be provided in a compatible manner. When the crystallite size of the (110) plane of the iridium oxide is less than 2.0 nm, an improvement in initial activity can be expected due to high BET specific surface area (SSA) of the iridium oxide; however, stability decreases due to an increase in defective sites that serve as starting points of corrosion and disappearance. When the crystallite size of the (110) plane of the iridium oxide is more than 4.0 nm, an improvement in stability due to decrease of defective sites can be expected; however, active sites required for an oxygen generation reaction are insufficient due to low BET specific surface area (SSA) of the iridium oxide, and thus initial activity decreases.

The iridium oxide of the present invention is made of single-phase rutile-structured iridium oxide.

### Examples

The present invention will be described in more detail below with reference to Examples and Comparative Examples. The present invention is not limited to these Examples.

### Example 1

16 L of an aqueous hydrochloric acid solution of chloroiridic acid containing 850 g of iridium and having a pH of 1.0 or less was heated to 95°C, 10.7 g of sodium bromate was added, and 40% aqueous sodium hydroxide solution was immediately added to neutralize to a pH of 11.0, to thereby yield a precipitate of iridium hydroxide. The precipitate of iridium hydroxide that was allowed to cool to room temperature was filtered and washed, to yield a filter cake. Hydrochloric acid was added to the obtained filter cake to adjust the pH to 1.0. The resultant product was subjected to solvent removal by distillation under reduced pressure at 50°C by using an evaporator and then crushed to form powder. The powder was fired in air at 430°C for 5 hours by using an electric furnace, to thereby produce iridium oxide powder having an acicular or columnar structure.

### Example 2

Iridium oxide powder having an acicular or columnar structure of Example 2 was produced in the same manner as in Example 1 except for changing the temperature at the time of solvent removal by distillation using an evaporator to 60°C.

### Example 3

Iridium oxide powder having an acicular or columnar structure of Example 3 was produced in the same manner as in Example 1 except for performing solvent removal by distillation after removal of a supernatant by using a centrifugal separator.

### Comparative Examples

### Comparative Example 1

Commercially available iridium oxide (Premion (trade name), available from Alfa Aesar) not having an acicular or columnar structure was used.

### Comparative Example 2

Iridium oxide powder of Comparative Example 2 was produced in the same manner as in Example 1 except for firing at 550°C for 5 hours.

### Comparative Example 3

0.4 L of a hydrochloric acid solution of chloroiridic acid containing 22 g of iridium and having a pH of 1.0 or less was heated to 95°C, 0.33 g of potassium bromate was added, and a potassium hydroxide solution was added to neutralize to a pH of 11.1, to thereby yield a precipitate of iridium hydroxide. After the neutralization, heating and stirring were continued for 1 hour, and the resultant product was subjected to filtration, washing, drying, and crushing to form powder. The powder was fired in air at 500°C for 5 hours by using an electric furnace, to thereby produce iridium oxide powder of Comparative Example 3.

The following physical property evaluations were performed on each of the iridium oxides of Examples and Comparative Examples. The results are shown in Table 1.

### Measurement of BET Specific Surface Area of Iridium Oxide

The specific surface area of the iridium oxide was measured by the BET flow method by using a full automatic specific surface area analyzer (Macsorb (trade name) HM model-1220, available from Mountech Co., Ltd.). The pretreatment conditions included a degassing temperature of 100°C and a degassing time of 20 minutes.

### Measurement of Crystallite Size of Iridium Oxide

The crystallite size of the iridium oxide was determined as follows. An XRD pattern of a catalyst-loaded carbon was taken in the following measurement conditions by using an X-ray diffractometer (SmartLab, available from Rigaku) using CuKα radiation as a radiation source. The resulting XRD pattern was analyzed by using an integrated powder X-ray diffraction analysis software (PDXL, available from Rigaku), and the crystallite size was determined based on a peak of rutile-structured iridium oxide (110) plane around 28°.

### XRD Measurement Conditions

Radiation source: CuKα (line focus), wavelength: 1.541836 Å
Operation axis: 2θ/θ, measurement method: continuous, counting unit: cps
Angle at start: 10.0°, angle at end: 90.0°, cumulative number: 1
Sampling width: 0.01°, scanning speed: 4°/min
Voltage: 40 kV, current: 30 mA
Incident parallel slit: soller 5.0°, length limiting slit: 10 mm
Receiving parallel slit: soller 5.0°, receiving slit: 20 mm
Offset angle: 0°
Goniometer radius: 300 mm, optical system: focusing, slit: slit for D/teX Ultra
Detector: D/teX Ultra 250
Ni-Kβ filter: none

### Form Observation of Iridium Oxide

The form of the iridium oxide was observed by using an atomic-resolution electron microscope (JEM-ARM200F, available from JEOL Ltd., acceleration voltage: 200 kV).

**[Table 1]**

| | BET specific surface area [m²/g] | Crystallite size [nm] |
|---|---|---|
| Example 1 | 100 | 2.4 |
| Example 2 | 111 | 3.7 |
| Example 3 | 77 | 2.2 |
| Comparative Example 1 | 22 | - |
| Comparative Example 2 | 51 | 5.5 |
| Comparative Example 3 | 30 | 11.3 |

In Example 1 to Example 3, each of the iridium oxide had a BET specific surface area of 70 m²/g or more and 120 m²/g or less and a crystallite size of 2.0 nm or more and 4.0 nm or less, i.e., iridium oxide having high specific surface area and crystallinity in a compatible manner was produced. Furthermore, the form was an aggregate of acicular or columnar particles.

In Comparative Example 1, the iridium oxide had a small BET specific surface area of 70 m²/g or less. It was found that amorphous iridium oxide was produced because a peak of (110) plane of the rutile-structured iridium oxide was not observed and the crystallite size was not calculated.

In each of Comparative Example 2 and Comparative Example 3, the BET specific surface area of the iridium oxide was small, i.e., 70 m2/g or less, and the crystallite size was large, i.e., 4.0 nm or more. The results indicated that crystallized iridium oxide was produced. The form in Comparative Example 2 was an aggregate of acicular or columnar particles.

To evaluate the performance as a catalyst for proton exchange membrane water electrolysis, each of the iridium oxides of Examples and Comparative Examples was evaluated by the methods mentioned below.

### 1. Preparation of Electrode

By using an ultrasonic disperser, 6.3 mg (in terms of Ir) of the iridium oxide of each of Examples and Comparative Examples, 8.0 mL of pure water, 17.4 µL of ionomer (Nafion DE520CS, available from Chemours), and 8.0 mL of ethanol (available from FUJIFILM Wako Pure Chemical Corporation) were mixed and dispersed for 30 hours, to prepare a catalyst ink. The catalyst ink was applied on a gold disk (diameter: 5 mm) so that the amount of iridium was 30 µg/cm2, to prepare an electrode for measurement.

### 2. Electrochemical Measurement

The electrode for measurement was immersed in 0.1 mol/L perchloric acid at 23°C saturated with nitrogen gas, a reversible hydrogen electrode (RHE) was used as a reference electrode, and a platinum wire was used as a counter electrode. Cyclic voltammetry was performed for 100 cycles using a potentio/galvanostat (HZ-7000, available from Hokuto Denko K.K.) in a potential scan range of 0.05 to 1.20 V (vs. RHE) and a potential scan speed of 50 mV/sec. Thereafter, while the electrode for measurement was rotated at 2500 rpm with a rotary electrode device (HR-500, available from Hokuto Denko K.K.), polarization curve was measured at an electric potential of 1.00 V to 1.55 V (vs. RHE) and a potential scan speed of 1 mV/sec. Based on the obtained polarization curve, a mass activity was calculated by dividing the current value at 1.50 V (vs. RHE) by the amount of iridium on the electrode. The polarization curve measurement was repeated for 4 times, and an activity retention rate was calculated by dividing the mass activity obtained from the fourth polarization curve (mass activity after electrolysis test) by the first polarization curve (initial activity).

**[Table 2]**

| | Initial mass activity at 1.50 V [A/g] | Mass activity at 1.50 V after electrolysis test [A/g] | Activity retention rate [%] |
|---|---|---|---|
| Example 1 | 31.6 | 30.5 | 96.5 |
| Example 2 | 23.0 | 23.3 | 101.3 |
| Example 3 | 26.9 | 26.9 | 100.4 |
| Comparative Example 1 | 7.1 | 6.5 | 91.5 |
| Comparative Example 2 | 4.8 | 4.4 | 91.7 |
| Comparative Example 3 | 5.4 | 5.0 | 92.6 |

In Example 1 to Example 3, the crystallite size was 2.0 nm or more and 4.0 nm or less, and the BET specific surface area (SSA) determined by nitrogen adsorption measurement was 70 m²/g or more and 120 m²/g or less; i.e., the crystallite size and the BET specific surface area were provided in a compatible manner at a high level. Thus, there was produced iridium oxide having a high initial activity; i.e., a mass activity of 20 A/g or more, and excellent stability; i.e., an activity retention rate improved by 5% or more as compared to one in the related art.

In Comparative Example 1, the BET specific surface area (SSA) determined by the nitrogen adsorption measurement was 70 m²/g or less, and the crystallite size was small, i.e., 2.0 nm or less. Thus, there was produced iridium oxide having a low mass activity of 20 A/g or less and an activity retention rate of 91.5%, i.e., iridium oxide having low initial activity and stability.

In Comparative Example 2 and Comparative Example 3, while the crystallite size was large, i.e., 2.0 nm or more, the BET specific surface area (SSA) determined by the nitrogen adsorption measurement was small, i.e., 70 m²/g or less. Thus, iridium oxide having a mass activity of 20 A/g or less, i.e., a low initial activity was produced.

### Industrial Applicability

The iridium oxide according to the present disclosure has high initial activity and excellent stability. Thus, the iridium oxide according to the present disclosure can be used as an electrode catalyst in a membrane electrode assembly for a proton exchange membrane water electrolysis.

## Claims

1. Iridium oxide having a rutile structure, wherein
a crystallite size calculated based on a peak of a (110) plane of the rutile-structured iridium oxide determined by X-ray diffractometry is 2.0 nm or more and 4.0 nm or less, and
a BET specific surface area measured by nitrogen adsorption measurement is 70 m²/g or more and 120 m²/g or less.

2. The iridium oxide according to claim 1, wherein a form observed with an electron microscope is an aggregate of acicular or columnar particles having a major axis length of 200 nm or less and a minor axis length of 10 nm or less, and a diameter of the aggregate is 1 µm or less.

3. A method for producing the iridium oxide claimed in claim 1 or 2, the method comprising:
preparing an oxidizing agent-containing aqueous solution by adding an oxidizing agent to a heated iridium-containing acidic aqueous solution, and neutralizing the thus-prepared aqueous solution by adding an alkaline aqueous solution to the aqueous solution, thereby generating a precipitate of iridium hydroxide;
filtering the aqueous solution comprising the precipitate, and washing the remaining precipitate, thereby yielding a filter cake of the iridium hydroxide; and
adding hydrochloric acid to the filter cake to prepare an iridium hydroxide suspension, subjecting the suspension to solvent removal by distillation, and then firing a dry solid product obtained by the solvent removal at 420 to 470°C in an oxygen-containing atmosphere.

4. A membrane electrode assembly for proton exchange membrane water electrolysis, wherein the iridium oxide claimed in claim 1 or 2 is comprised in an electrode.

5. A proton exchange membrane water electrolyzer, wherein the iridium oxide claimed in claim 1 or 2 is comprised in an electrode of a membrane electrode assembly.
